Europäisches Patentamt

European Patent Office

Office européen des brevets

(19)

(11) Numéro de publication : **0 505 266 A1**

# (12) DEMANDE DE BREVET EUROPEEN

(21) Numéro de dépôt : 92400712.3

(51) Int. Cl.⁵ : **G08G 1/123**

(22) Date de dépôt : **17.03.92**

(30) Priorité : **19.03.91 FR 9103321**

(43) Date de publication de la demande :
**23.09.92 Bulletin 92/39**

(84) Etats contractants désignés :
**CH DE ES IT LI**

(71) Demandeur : **Etablissement Public
Télédiffusion de France
10, rue d'Oradour-sur-Glane
F-75015 Paris (FR)**

(72) Inventeur : **Frossard, Didier
24 Rue Mertens
F-92270 Bois Colombes (FR)**
Inventeur : **Roubertou, Denis
41 Rue de Malakoff
F-92230 Chatillon (FR)**

(74) Mandataire : **Fréchède, Michel et al
Cabinet Plasseraud 84, rue d'Amsterdam
F-75009 Paris (FR)**

(54) **Système de mise hors service contrôlée et de localisation d'un équipement meuble ou mobile.**

(57)   L'invention concerne un système de mise hors service contrôlée et de localisation d'un équipement meuble ou mobile par un abonné habilité.

Le système comporte un centre serveur (1) accessible par l'abonné au moyen d'un code d'accès et transmission d'un ordre d'intervention, un réseau de transmission sélective vers l'équipement (3) ce réseau de transmission comportant un émetteur radioélectrique analogique disposant d'une sous-porteuse et un circuit récepteur décodeur (4) d'un message d'ordre de mise hors service de l'équipement (3) ce circuit étant placé au niveau de cet équipement. Un circuit (5) d'inhibition contrôlée permet d'assurer la mise hors service, la mise en service ou la mise en état de veille de l'équipement(3).

Application à des véhicules automobiles, des récepteurs de radiofréquence ou de télévision, des appareils haute fidélité, radiotéléphones, microordinateurs, calculateurs ou caméras vidéo.

EP 0 505 266 A1

L'invention concerne un système de mise hors service contrôlée et de localisation d'un équipement meuble ou mobile.

Actuellement, les systèmes de protection d'équipements meubles ou mobiles, tels que les véhicules automobiles, comportent essentiellement une centrale d'alarme installée à bord du véhicule, l'alarme étant déclenchée en cas d'effraction du véhicule notamment. Dans le meilleur cas, lorsque le système d'alarme entre en fonctionnement, celui-ci apparaît dissuasif, au moins temporairement. L'expérience montre cependant qu'en raison d'une fiabilité ou d'une inviolabilité insuffisantes de ces systèmes les auteurs de l'effraction arrivent bien souvent à leurs fins.

Plus récemment des systèmes plus élaborés ont été proposés dans lesquels la mise sous protection de ces équipements meubles ou mobiles est effectuée à partir d'un poste central, par liaison hertzienne, un numéro d'identification étant attribué à chacun des équipements. Sur appel de ce numéro d'identification, l'équipement correspondant est ainsi mis en position de non fonctionnement par l'intermédiaire du poste central. Un tel type de système a été décrit notamment par la demande de brevet européen 0 291 995 publiée le 23 novembre 1988.

Un tel système, sans nul doute présentant un intérêt théorique, est cependant soumis aux limitations ci-après.

En premier lieu, il implique l'utilisation d'un système radio-numérique, en raison de la forme même des messages d'identification ou d'intervention transmis. De tels systèmes radio-numériques ne sont actuellement pas disponibles et la réalisation du système décrit par le document précité reste donc problèmatique.

En deuxième lieu, dans l'exemple décrit, la protection de l'équipement est effectuée par la destruction partielle d'un circuit d'alimentation électrique de l'équipement, la remise en service de ce dernier nécessitant l'approvisionnement auprès d'un agent accrédité, toute réparation de fortune étant exclue.

Un tel système ne peut donc prétendre à une large couverture territoriale à l'échelle nationale par exemple, ce qui bien entendu en réduit la portée et l'intérêt pratique.

L'invention a pour objet de remédier aux inconvénients précités par la mise en oeuvre d'un système de mise hors service contrôlée d'équipement meuble ou mobile permettant une couverture à l'échelle nationale par exemple.

Un autre objet de la présente invention est la mise en oeuvre d'un système de mise hors service contrôlée d'équipement meuble ou mobile permettant en outre la localisation de cet équipement dès la demande de mise hors service contrôlée par l'utilisateur habilité.

Un autre objet de la présente invention est la mise en oeuvre d'un système de mise hors service contrôlée d'équipement meuble ou mobile, dissuasif du vol de ces équipements, par mise hors service, mise en service ou mise à l'état de veille de cet équipement avec un haut degré de fiabilité.

Le système de mise hors service contrôlée d'un équipement meuble ou mobile par un abonné propriétaire ou habilité à partir d'un point central de surveillance et/ou d'intervention à distance, objet de l'invention, est remarquable en ce qu'il comprend un centre serveur accessible par cet abonné sur présentation d'un code d'accès et transmission d'un ordre d'intervention correspondant et des moyens de transmission sélective, vers cet équipement, d'un message d'ordre de mise hors service de cet équipement, ces moyens de transmission comportant un réseau comprenant un émetteur radioélectrique analogique disposant d'une sous-porteuse. Des moyens récepteurs décodeurs du message d'ordre de mise hors service de l'équipement sont placés au niveau de celui-ci et des moyens d'inhibition contrôlée du fonctionnement de l'équipement commandés par les moyens récepteurs décodeurs sont prévus pour assurer soit la mise hors service, soit la mise en service, soit la mise en état de veille de l'équipement.

L'invention trouve application à la surveillance de tout type d'équipement meuble ou mobile muni d'une source d'énergie électrique, tel que véhicule automobile, poste récepteur de radio ou de télévision, ou analogue.

Elle sera mieux comprise à la lecture de la description et à l'observation des dessins ci-après, dans lesquels :
- la figure 1 représente un schéma fonctionnel représentatif du système de mise hors service contrôlée objet de la présente invention,
- la figure 2 représente un schéma synoptique d'un récepteur-décodeur conforme à l'objet de la présente invention,
- la figure 3a représente un schéma illustratif du code personnalisé et du message de commande de mise hors service contrôlée utilisés conformément à l'objet de l'invention dans le cas d'une radiomessagerie de type RDS, et
- la figure 3b représente un exemple de format du message conformément à la norme RDS,
- la figure 4 représente une variante avantageuse du système de mise hors service contrôlée et de localisation d'un équipement meuble ou mobile permettant en outre la localisation de l'équipement meuble ou mobile dès la demande de mise hors service contrôlée par l'utilisateur habilité.
- la figure 5a représente un détail de réalisation d'un récepteur-décodeur dans le cas de la variante représentée en figure 4,
- la figure 5b représente un format de messages émis dans le cas de la variante représentée en figure 4.

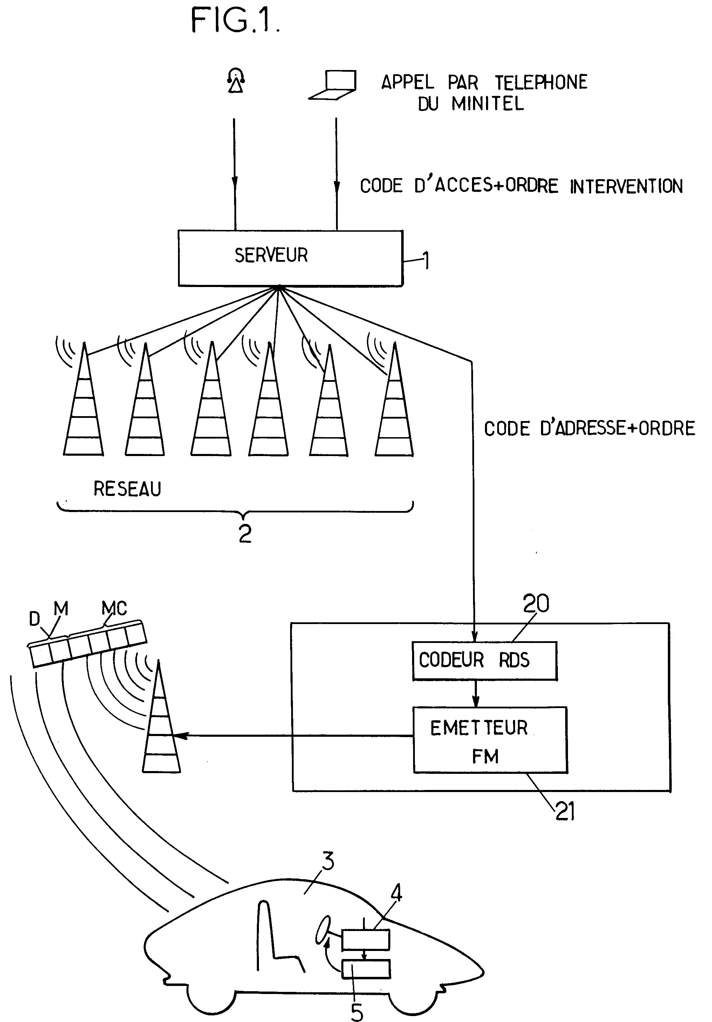

Une description plus détaillée d'un système de mise hors service contrôlée et de localisation d'un équipement meuble ou mobile conforme à l'objet de la présente invention sera décrit en liaison avec la figure 1.

Selon la figure précitée, le système objet de l'invention permet la mise hors service contrôlée d'un équipement meuble ou mobile, ainsi que la localisation de cet équipement, par un abonné propriétaire ou habilité. Ces opérations sont normalement effectuées à partir d'un point central de surveillance ou d'intervention à distance.

Dans ce but, le système selon l'invention comporte par exemple un centre serveur 1 accessible par l'abonné, ou la personne habilitée sur présentation d'un code d'accès et transmission d'un ordre d'intervention correspondant. On comprendra bien sûr que le propriétaire abonné ou la personne habilitée peut par exemple communiquer au centre serveur 1, tel que représenté en figure 1, le code d'accès précité et l'ordre d'intervention correspondant par l'intermédiaire d'une liaison téléphonique ou d'un Minitel par exemple. L'introduction du code d'accès au niveau du centre serveur et la prise en compte de l'ordre d'intervention correspondants peuvent être effectués soit par un opérateur soit de manière totalement automatique sans sortir du cadre de l'objet de la présente invention.

En outre, ainsi qu'on l'a également représenté en figure 1, le système comporte une ressource 2 de transmission sélective vers l'équipement précité d'un message M d'ordre de mise hors service de cet équipement 3. Sur la figure 1, l'équipement meuble ou mobile 3 est représenté de manière non limitative et à seul titre d'exemple par un véhicule automobile.

Conformément à un aspect particulièrement avantageux du système objet de la présente invention, la ressource de transmission précitée comporte avantageusement un émetteur radioélectrique analogique disposant d'une sous-porteuse. Ainsi, le système objet de la présente invention utilise-t-il de manière avantageuse un réseau émetteur'de radiomessagerie lequel permet de couvrir un territoire correspondant à celui d'un territoire national ou même d'un groupement de territoires nationaux.

Ainsi qu'on l'a en outre représenté en figure 1, l'équipement 3 meuble ou mobile comporte de manière avantageuse des circuits 4 récepteurs-décodeurs du message d'ordre de mise hors service de cet équipement. Un circuit 5 d'inhibition contrôlée placé au niveau de l'équipement meuble ou mobile et répondant aux circuits 4 récepteurs-décodeurs permet d'assurer soit la mise hors service soit la mise en service soit la mise en état de veille de cet équipement 3 ainsi qu'il sera décrit ultérieurement dans la description.

De manière classique, le code d'accès, permettant l'accession au centre serveur 1, est un code personnalisé attribué à l'abonné.

De la même manière, et de manière avantageuse non limitative, le code ou ordre d'intervention est lui-même un code personnalisé associé à l'équipement meuble ou mobile proprement dit.

De préférence, les deux codes précités sont transmis au centre serveur 1 par l'abonné ou une personne habilitée afin d'engendrer, sur réponse positive à un critère de contrôle, une demande de mise hors service de l'équipement 3 précité. Bien entendu, dans le cas où la réception du code personnalisé et du code d'intervention sont assurés par un opérateur, le critère de contrôle peut simplement consister en la vérification du code d'accès ou à tout le moins de la validité actuelle d'un tel code d'accès. Dans ce cas, la transmission de l'ordre ou du code d'intervention peut alors être réalisée suite à vérification de la correspondance de l'ordre demandé et de certaines caractéristiques de l'équipement meuble ou mobile précité.

Lorsque la réception du code d'accès et de l'ordre ou code d'intervention correspondant est assurée par des moyens automatiques, les critères précités peuvent être réalisés au moyen de critères de tri et de comparaison, lesquels ne seront pas décrits en détail car correspondant à des techniques habituelles en matière de traitement automatique de données.

D'une manière générale, le message M de mise hors service de l'équipement 3 peut comporter avantageusement un drapeau d'identification, noté D sur la figure 1, ce drapeau d'identification contenant le code personnalisé attribué à l'équipement 3 suivi d'un message de commande MC de mise hors service contrôlée de cet équipement. Une description plus détaillée de la structure du message M sera donnée ultérieurement dans la description.

Ainsi qu'on l'a en outre représenté en figure 1, le réseau d'émission radioélectrique comprend au moins un point d'émission émetteur radioélectrique, ce ou ces points étant répartis sur un territoire de contrôle déterminé. Chaque point d'émission comporte, ainsi qu'on l'a représenté plus en détail en figure 1, au moins un codeur radiofréquence 20 permettant d'assurer le codage d'au moins un paramètre radioélectrique d'une onde radiofréquence à partir du message d'ordre de mise hors service contrôlée de l'équipement 3 et un émetteur à modulation de fréquence 21 permettant d'engendrer une onde radioélectrique modulée par le message M d'ordre de mise hors service de cet équipement 3 sur une cellule territoriale du territoire de contrôle.

Selon un mode de réalisation particulièrement avantageux du système objet de l'invention, celui-ci utilise le système de radiomessagerie connu sous le nom de "système RDS" soit sous le vocable anglo-saxon "Radio Data System". On rappelle qu'un tel système permet de diffuser des données numériques à faible débit, notamment un débit brut de 1.187,5 bits par seconde pour un débit utile inférieur à 300 bps sur une onde sous-porteuse à 57 kHz d'une émission en modulation de fréquence.

Pour une description plus détaillée de ce type d'émission, on pourra se reporter avantageusement à la norme européenne EN 50067.

Une limitation du système RDS précité provient notamment du fait que le nombre total d'adresses, c'est-à-dire en définitive le nombre total d'équipements meubles ou mobiles susceptibles d'être mis sous surveillance par le système précité, est de un million au plus pour un codage des adresses précédemment mentionné sur six chiffres décimaux par exemple. Une grande partie de ces adresses étant réservée au service de radiomessagerie précité, il est avantageux, conformément au système objet de la présente invention, d'augmenter le nombre d'adresses alloué au nombre d'équipements mobiles ou meubles soumis au processus de contrôle au moyen du système objet de la présente invention.

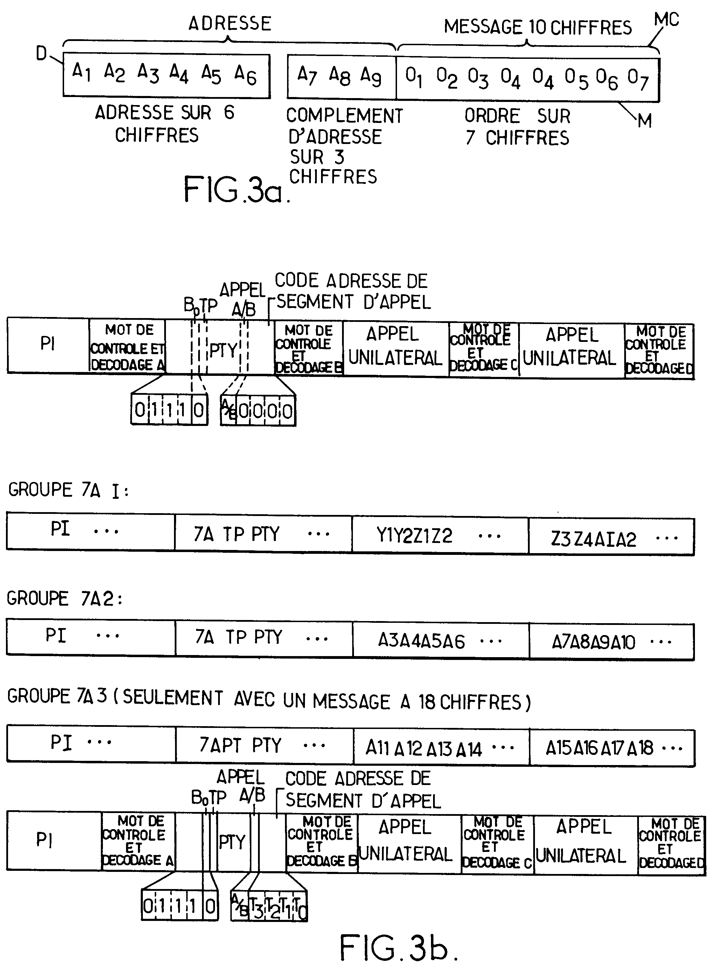

Ainsi qu'on l'a représenté en outre en figure 3 le drapeau d'identification contenant le code personnalisé de l'équipement 3 est ainsi avantageusement codé sur neuf mots ou chiffres lesquels sont notés $A_1$ à $A_6$ dans la partie adresse proprement dite du message M transmis par le système de radiomessagerie RDS, un complément d'adresse sur trois chiffres notés $A_7$, $A_8$, $A_9$ étant alors prévu au niveau de la partie message proprement dite à laquelle est réservé normalement un espace correspondant à dix chiffres. L'ordre d'intervention est alors codé par exemple sur sept chiffres notés $O_1$ à $O_7$ sur la figure 3a.

Ainsi, en utilisant le complément d'adresse sur trois chiffres tel que représenté en figure 3a, le nombre d'équipements meubles ou mobiles adressables au moyen du dispositif objet de la présente invention peut passer de cent mille à cent millions.

On notera en outre que selon une variante de réalisation, l'un et/ou l'autre drapeau d'identification respectivement message de commande peuvent comporter au plus trois chiffres réservés attribués à l'identification d'un type d'équipement relevant par exemple d'un même abonné ou propriétaire. Ceci permet notamment pour certains types d'abonnés, tels que les services publics ou autres par exemple ou les services à caractère public, désireux de soumettre un nombre important d'équipements meubles ou mobiles leur appartenant ou dont ils ont la surveillance à un contrôle au moyen du système objet de la présente invention, d'assurer ainsi une mise sous contrôle par famille d'équipement selon un critère déterminé.

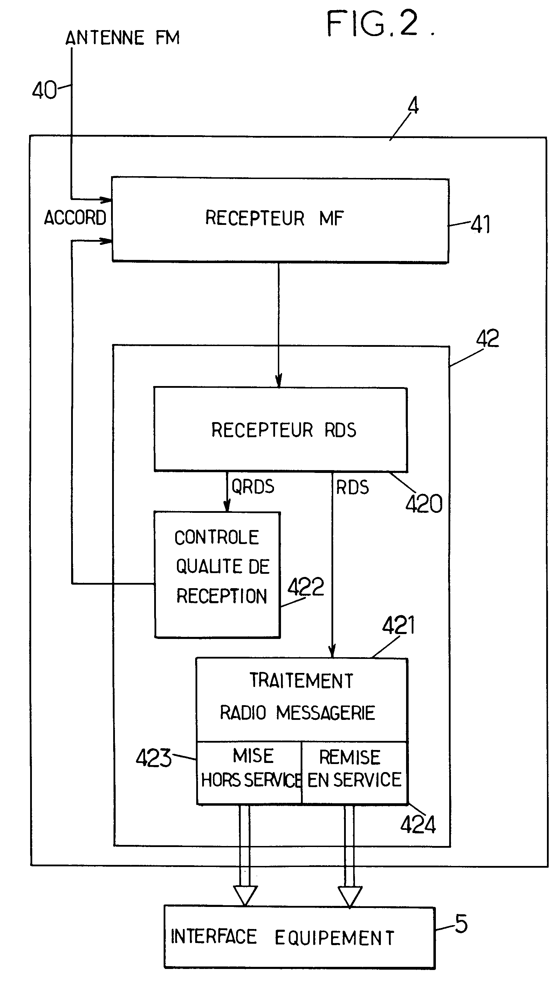

Une description plus détaillée d'un circuit récepteur-décodeur 4 du message M ce circuit récepteur-décodeur 4 étant implanté au niveau d'un équipement meuble ou mobile considéré, sera donnée en liaison avec la figure 2.

Selon la figure précitée, le circuit récepteur-décodeur 4 comporte une antenne radiofréquence 40 connectée à un élément actif de réception comprenant un récepteur à modulation de fréquence 41 ce récepteur à modulation de fréquence étant bien entendu relié à l'antenne 40 précitée.

Un décodeur radiofréquence est prévu afin de permettre de reconstituer le message d'ordre de mise hors service contrôlée de l'équipement, ce décodeur 42 comportant, ainsi que représenté en figure 2, un récepteur de type RDS, noté 420. Le récepteur RDS délivre à un premier circuit de contrôle de qualité de réception 422 un signal de contrôle de qualité de réception, ce circuit de contrôle de qualité de réception 422 étant rebouclé sur le récepteur à modulation de fréquence 41, de façon à assurer en permanence une réception optimale par un réglage d'accord.

Le décodeur 42 comporte également un module 421 de traitement de radiomessagerie lequel reçoit du récepteur RDS un signal de réception RDS. Le module 421 de traitement de messagerie permet, sur critère d'évaluation du message d'ordre de mise hors service contrôlée reconstitué, d'assurer la commande des moyens d'inhibition contrôlée 5 précédemment décrits en liaison avec la figure 1.

De manière préférentielle, les moyens d'inhibition contrôlée 5 peuvent être reliés au module 421 de traitement de radiomessagerie par l'intermédiaire d'un circuit d'interface lequel est interconnecté, ainsi que représenté en figure 2, au module 421 de traitement de radiomessagerie par l'intermédiaire d'un module logique 423 de mise hors service et d'un module logique de remise en service 424. L'interface précitée constitue en fait une unité d'actionnement permettant d'effectuer la commande d'inhibition contrôlée.

Sur la figure 3b, on a représenté la structure des messages transmis par un système de type RDS conformément aux dispositions de la norme européenne citée précédemment dans la description. En particulier, on pourra noter, que de manière avantageuse l'extension d'adresse, ou complément d'adresse sur trois chiffres, peut être réalisée sur les parties notées 7A correspondant à des codes de groupes. Ainsi un message à dix chiffres, tel que représenté en figure 3a, pourra être codé sur deux groupes 7A, tels que les groupes 7A1 et 7A2 représentés en figure 3b.

On notera, en outre, que l'ordre de mise hors service, ou d'ailleurs de remise en service, ainsi qu'il sera décrit ultérieurement dans la description, peut être transmis sur un radiomessage de type désigné, en vocabulaire anglo-saxon, par "bip-only", ou sur un radiomessage numérique à dix chiffres ou à dix-huit chiffres ou même alpha-numérique. Dans le cas où le radiomessage est numérique à dix chiffres, tous les chiffres sont utilisés afin notamment de rendre le message rendondant en vue d'éliminer les erreurs de transmission et de personnaliser l'ordre de mise hors service ou de remise en service vis-à-vis de l'équipement meuble ou mobile 3 afin d'éliminer bien entendu les erreurs d'aiguillage. Bien entendu, dans ce cas, une telle sécurité ne pourra être obtenue que dans le cas où l'utilisateur abonné ou propriétaire habilité communique lui-même au serveur 1 un message numérique.

Le fonctionnement général du système objet de l'invention tel que décrit en figure 1 à 3a, 3b, est le suivant :

- Lors de la souscription au service de surveillance au moyen du système objet de la présente invention, l'utilisateur de ce service pour un équipement 3 meuble ou mobile considéré a préalablement acheté ou loué un système récepteur lequel est fourni sous forme d'un boîtier dit "boîtier-pager". Ce boîtier peut être soit pré-intégré à l'équipement meuble ou mobile considéré, dont la protection est souhaitée, soit rajouté ultérieurement. Le boîtier est accompagné d'un code d'adresses, conformément au sens habituel de la radiomessagerie. En outre, un code d'appel, correspondant au code d'accès, est communiqué à l'utilisateur par le gestionnaire du service. Les deux codes, code d'appel et code correspondant à l'ordre d'intervention, sont communiqués au serveur 1 dont le rôle est alors d'assurer la gestion technique du service en assurant l'interface entre l'utilisateur et le réseau de type RDS. Le centre serveur 1 effectue alors la mise en correspondance biunivoque entre les deux codes précités.

En cas de vol de l'équipement meuble ou mobile 3, le propriétaire ou la personne habilitée appelle le centre serveur 1 et lui communique le code d'accès. Après vérification de la validité de ce code d'accès par le serveur 1, ainsi que mentionné précédemment dans la description, l'utilisateur est alors invité à communiquer l'ordre de mise en service. Cet ordre peut être soit la réponse simple à une question du serveur soit, au contraire, ainsi que déjà mentionné précédemment dans la description, un message numérique de plusieurs chiffres. Une telle solution permet alors une sécurité de transaction très importante car il est possible, ainsi que déjà mentionné précédemment, de personnaliser ce message en fonction de l'équipement précité.

L'ordre de mise hors service est alors validé par le centre serveur 1 puis transmis au boîtier de l'équipement 3 par l'intermédiaire du message M précédemment décrit. Ce dernier, par l'intermédiaire du récepteur RDS décrit en liaison avec la figure 2, décode ce message et adresse les commandes correspondantes à l'équipement 3 lui-même en entraînant une mise hors service soit immédiate soit différée selon l'application considérée.

Dans ce but, ainsi que représenté en liaison avec la figure 2, les circuits de mise hors service 423 et de remise en service 424 peuvent jouer le rôle analogue à celui de deux bascules bistables en parallèle, la mise hors service immédiate pouvant par exemple correspondre à un état arbitraire 00 des modules 423 et 424, la mise hors service différée pouvant correspondre à un état logique 0 de l'élément 423 et à un état logique 1 de l'élément 424, alors que la remise en service correspondra par exemple à un état logique équivalent à l'état 1 de l'élément 423 et à un état logique équivalent à l'état 1 de l'élément 424. Bien entendu, la remise en service telle que précédemment décrite ne sera effectuée que sur ordre du titulaire propriétaire habilité de l'équipement, lorsque ce dernier a été restitué. Cette remise en service peut alors être réalisée de la même façon par appel du centre serveur 1, communication du numéro d'appel et de l'ordre de remise en service puis transmission de celui-ci à l'équipement 3 par l'intermédiaire du boîtier.

On conviendra d'une manière générale que la mise à l'état de veille ou la mise à l'état hors service différé peuvent correspondre chacune à l'état logique équivalent 0 respectivement 1 des éléments 423 et 424 précités. On comprendra bien sûr que dans un tel cas la mise hors service définitive pourra être effectuée à partir de la prise en compte d'un paramètre de fonctionnement de l'équipement 3 considéré afin, en particulier, d'éviter tout risque de destruction ou de dommages causés à celui-ci. A titre d'exemple non limitatif, et dans le cas où l'équipement est constitué par un véhicule automobile par exemple, le passage de la mise hors service différée, ou éventuellement de l'état de veille du système objet de la présente invention, à la mise hors service définitive pourra être commandé par la première coupure du contact électrique destiné à assurer le lancement du démarreur. Dans un tel cas, suite à la coupure du contact, le système objet de la présente invention permet alors d'inhiber le fonctionnement du véhicule ainsi protégé lorsque ce dernier, alors qu'il se trouvait soit à l'état de veille soit à l'état de mise hors service différée à la demande de l'utilisateur, est à l'arrêt.

On notera en outre qu'une fois que l'ordre de mise hors service est lancé, voire un ordre de mise à l'état de veille par exemple, celui-ci peut être avantageusement diffusé de façon cyclique pendant une période de temps variable selon les applications, cette période de temps pouvant atteindre plusieurs mois.

Enfin dans le cas où l'équipement 3 a été restitué, ce dernier peut être remis en service, dans les conditions précédemment mentionnées, par appel du centre serveur 1 puis communication du numéro d'appel et de l'ordre de remise en service et transmission de celui-ci à l'équipement 3 par l'intermédiaire du boîtier. D'une manière générale, on notera que l'antenne radiofréquence 40 et le boîtier c'est-à-dire l'élément actif de réception sont mécaniquement solidaires de l'équipement 3 et autoprotégés.

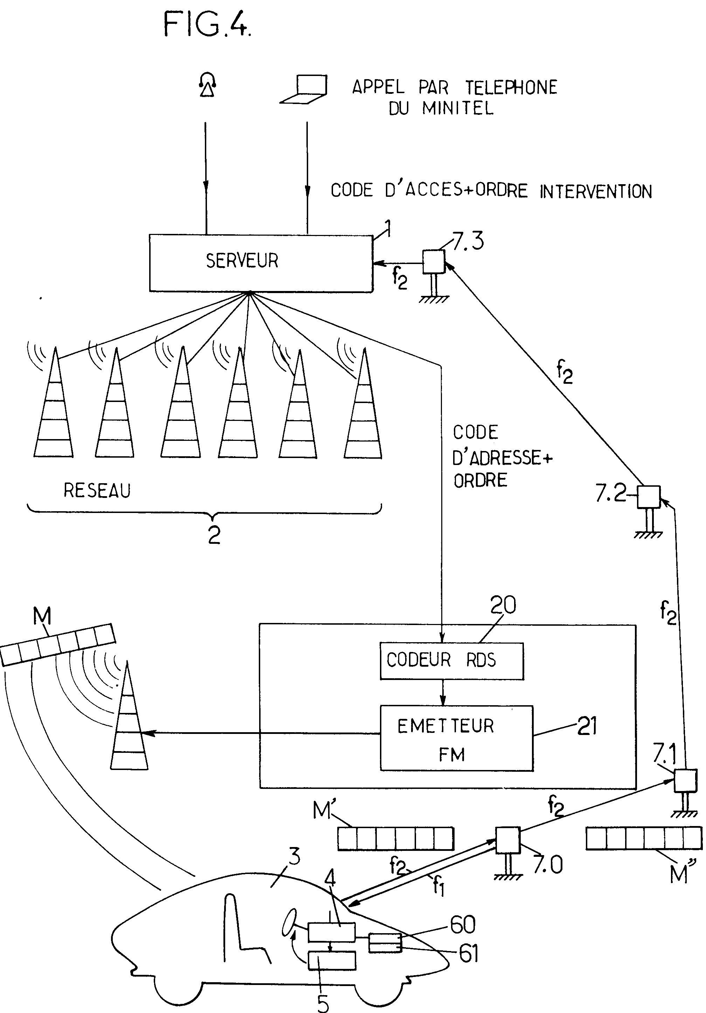

Un mode de réalisation particulièrement avantageux du système de mise hors service contrôlée et de localisation d'un équipement meuble ou mobile objet de la présente invention sera maintenant décrit en liaison avec la figure 4.

Sur cette figure les mêmes références représentent les mêmes éléments que dans le mode de réalisation précédemment décrit en liaison avec la figure 1.

Ainsi qu'on pourra le remarquer à l'observation de la figure 4, les moyens récepteurs décodeurs comportent en outre, connecté à l'antenne radiofréquence 40 un récepteur 60 de radiobalise sensible à une émission continue ou périodique d'un signal de radiobalise spécifique et un émetteur conditionnel de signal de radiobalise, cet émetteur conditonnel 61 émettant conditionnellement à la réception du message d'ordre de mise hors service contrôlée de l'équipement un message noté M' sur la figure 4 permettant d'assurer la signalisation et la localisation de l'équipement mobile 3 vers une radiobalise déterminée. Sur la figure 1 la radiobalise précitée est notée 7.0.

De préférence, les radiobalises notées 7.0 à 7.3 sur la figure 1 peuvent être constituées par des transpondeurs à fréquence codée, ces transpondeurs étant disposés selon un réseau constituant un maillage sur le territoire de contrôle. A titre d'exemple non limitatif, les radiobalises peuvent être constituées par des radiobalises commercialisées sous la dénommination "pointel" ou analogue.

D'une manière générale, on comprendra que certaines des radiobalises précitées, telle que la radiolise 7.0 représentée sur la figure 1, peuvent être constituées par des balises dites semi-actives, ces radiobalises émettant un signal codé à une fréquence f1 par exemple, ce signal comportant un code d'appel déterminé destiné à être reçu par le récepteur 60 de radiobalise installé au niveau de chaque équipement meuble ou mobile, ainsi que représenté en figure 4, afin d'inciter celui-ci à émettre par l'intermédiaire de l'émetteur conditionnel 61 le message M' précité, tel que représenté en figure 4, ce message comportant au moins une partie codée représentative de l'équipement meuble ou mobile considéré. On notera bien sûr que les radiobalises semi-actives, telle que la radiobalise 7.0 représentée en figure 4, peuvent être réparties en des points esssentiels du territoire tels par exemple que des passages obligés à la frontière de celui-ci, postes frontière, péages d'autoroute par exemple.

D'une manière générale, les radiobalises 7.1 à 7.3 sont au contraire des radiobalises de type classique, c'est-à-dire de type transpondeur, lesquelles permettent à partir du message M' émis par l'équipement mobile 3 d'acheminer ce message M' précité, ou à tout le moins un message M", tel que représenté en figure 4, comportant les caractéristiques de l'équipement mobile précitées ainsi que des caractéristiques de localisation décrites ultérieurement dans la description vers le centre serveur 1.

De manière classique, la balise semi-active 7.0 peut de préférence émettre un message d'appel à une fréquence f1 déterminée selon un code d'appel déterminé et le message M' réémis vers la balise 7.0 considérée semi-active, ou vers toute autre balise classique telles que 7.1 à 7.3 sur la figure 4, peut être réémis à une fréquence f2 déterminée vers l'une ou l'autre de ces radiobalises. Dès réception du message M' par la balise considérée, celle-ci, assurant sa fonction de transpondeur, réémet un message M" vers une balise située en amont, la notion d'amont étant définie en direction du centre serveur 1, ainsi que représenté en figure 4. On notera bien sûr que les radiobalises telles que représentées en figure 4 peuvent être réparties spatialement de manière absolument quelconque sur le territoire soumis à surveillance au moyen du système objet de la présente invention, l'adresse de chacune des radiobalises précitées étant par exemple représentative de la localisation d'un équipement meuble ou mobile considéré, la transmission successive des messages M' et M", ainsi que représenté en figure 4, pour assurer la remontée vers le centre serveur 1 pouvant par exemple être effectuée selon un chemin particulier. A titre d'exemple non limitatif, on considèrera que, pour assurer la remontée des messages M", les adresses des balises ou radiobalises assurant la remontée de ces messages vers le centre serveur 1 peuvent être ordonnées selon une stucture en arbre équilibrée ($B^+$ tree) de façon à assurer la retransmission des données du message M' respectivement M" relatives à l'identification de l'équipement meuble ou mobile 3 et à sa localisation vers le centre serveur 1 en un nombre minimum d'opérations. On notera d'ailleurs que sur l'ensemble du territoire sur lequel est implanté le système objet de la présente invention la densité de radiobalises peut être variable, celle-ci pouvant être de l'ordre d'une radiobalise au kilomètre selon un maillage déterminé en zone urbaine, cette densité pouvant être ramenée à une radiobalise pour dix kilomètres en zone non urbaine et en particulier dans le cas où l'équipement meuble ou mobile est constitué par un véhicule automobile le long des voies de communication.

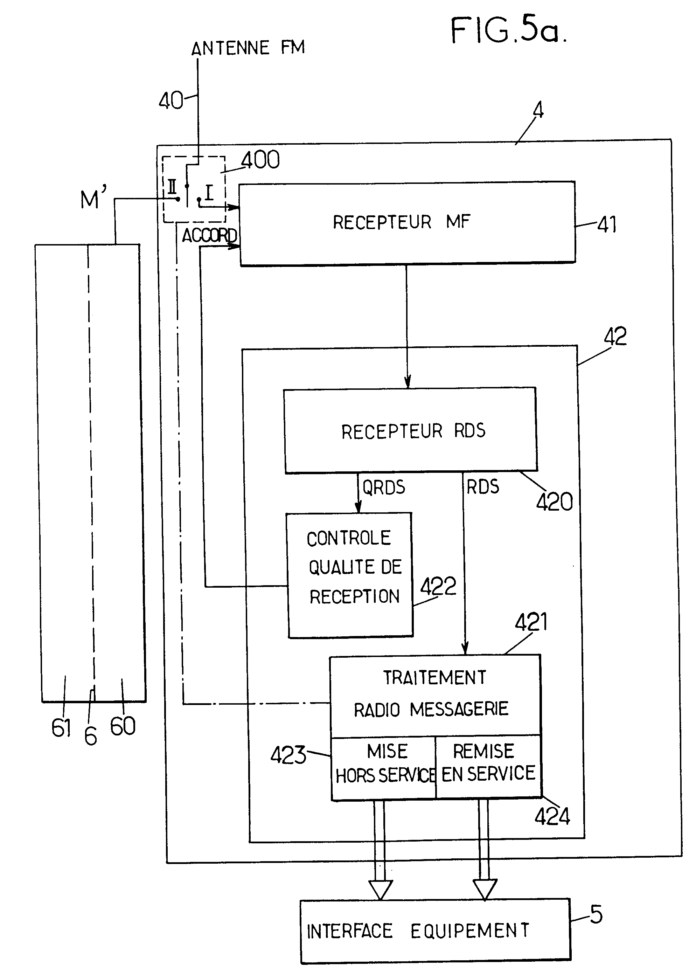

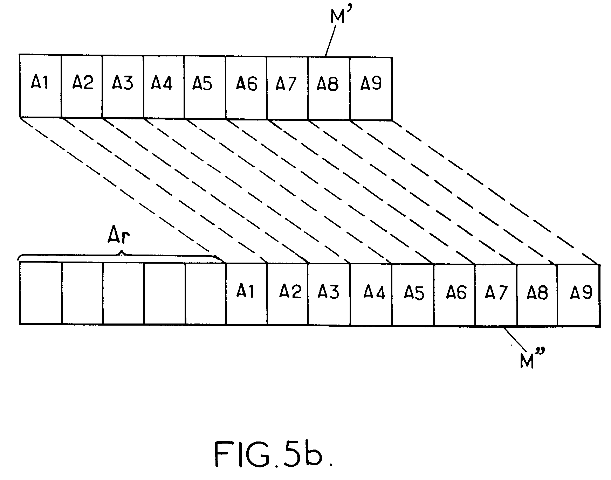

Une description plus détaillée de l'agencement du récepteur de radiobalise 60 et de l'émetteur conditionnel 61 en liaison avec le récepteur-décodeur 4 sera donnée en liaison avec les figures 5a et 5b relatives à la structure des messages M' et M" par exemple.

Ainsi qu'on l'a représenté sur la figure 5a, le récepteur 60 de radiobalise et l'émetteur conditionnel 61 sont reliés à l'antenne radiofréquence 40 par l'intermédiaire d'un interrupteur commandé 400 susceptible d'occuper deux positions I et II. Lors de la phase d'initlalisation précédemment décrite dans la description, l'interrupteur commandé 400 se trouve commuté en position I, le boîtier et en particulier le codeur-décodeur 4 étant alors configurés de façon à recevoir l'ordre de mise hors service ou de mise à l'état de veille de l'ensemble du système.

Sur réception du message relatif à l'ordre de mise hors service ou à l'état de veille précité, la détection par l'élément de traitement de radiomessagerie 421 de ce message pour l'équipement meuble ou mobile 3 considéré, cette détection pouvant être effectuée, par exemple de manière connue en soi par comparaison des éléments du message relatifs à l'identification de l'équipement 3 avec un code correspondant mémorisé au niveau de ce même élément 421 la mise hors service ou à l'état de veille est effectuée par les modules 423 et 424 précédemment décrits. Simultanément, l'élément 421 de traitement de radiomessagerie effectue la commande de l'interrupteur commandé 400 par la liaison représentée en traits mixtes à titre de simplification sur la figure 5a. L'interrupteur commandé 400 bascule alors en position II et permet l'interconnection du récepteur 60 de radiobalise et/ou de l'émetteur conditionnel 61.

Dans le cas où la mise hors service est commandée par les éléments 423 et 424, la connection de l'émetteur conditionnel 61 peut être alors réalisée avec l'antenne radiofréquence 40, l'émetteur conditionnel émettant alors le message M' représenté en figures 4 et 5b. Ce message M' peut comprendre par exemple l'ensemble des chiffres du message M précédemment décrit dans la description, le message M' étant par exemple transmis par codage d'amplitude sur une onde porteuse à la fréquence f2, fréquence de réception des radiobalises telles que la radiobalise 7.0 ou 7.1 à 7.3 par exemple. Sur réception du message M' par la radiobalise 7.0 par exemple, celle-ci réémet vers la balise 7.1 située en amont, selon le critère précédemment défini, un message M", tel que représenté en figure 5b, lequel comporte bien entendu les composantes du message M' relatives à l'identification de l'équipement meuble ou mobile 3 auxquelles ont été ajoutées des composantes de localisation notées AR, lesquelles sont propres à la balise 7.0. Le message M" ainsi constitué est alors transmis successivement vers les radiobalises 7.1, 7.2, 7.3 puis vers le centre serveur 1 selon le protocole décrit précédemment. Le centre serveur est alors en mesure de localiser l'équipement meuble ou mobile 3 précité.

Les récepteur 60 de radiobalises et émetteur conditionnel 61 associés à chaque équipement meuble ou mobile 3 ne seront pas décrits en détail car ces derniers peuvent être constitués par des récepteurs et émetteurs de type classique.

On notera enfin que dans le cas où l'équipement meuble ou mobile est constitué par un véhicule automobile, les circuits d'inhibition contrôlée de ce véhicule peuvent comporter de manière avantageuse une unité d'actionnement directement reliée au circuit d'allumage électronique ou d'injection de carburant du véhicule. L'unité d'actionnement ne sera pas décrite car elle correspond à des caractéristiques techniques classiques dans le domaine technique correspondant.

En outre, le système de mise hors service contrôlée d'un équipement meuble ou mobile objet de la présente invention peut être utilisé et appliqué à des véhicules automobiles, à des récepteurs de radiofréquence ou de télévision, des appareils haute fidélité, des radiotéléphones, des microordinateurs ou calculateurs ou caméras vidéo.

**Revendications**

1. Système de mise hors service contrôlée d'un équipement meuble ou mobile par un abonné propriétaire ou habilité, à partir d'un point central de surveillance et/ou d'intervention à distance, caractérisé en ce que ledit système comporte :
   – un centre serveur (1) accessible par ledit abonné sur présentation d'un code d'accès et transmission d'un ordre d'intervention correspondant,
   – des moyens (2) de transmission sélective, vers ledit équipement (3), d'un message M d'ordre de mise hors service de cet équipement (3), ces moyens de transmission comportant un émetteur radioélectrique analogique disposant d'une sous-porteuse,
   – des moyens (4) récepteurs-décodeurs, dudit message d'ordre de mise hors service dudit équipement, placés au niveau dudit équipement,
   – des moyens (5) d'inhibition contrôlée du fonctionnement dudit équipement (3) commandés par lesdits moyens récepteurs-décodeurs pour assurer, soit la mise hors service, soit la mise en service, soit la mise en état de veille dudit équipement (3).

2. Système selon la revendication 1, caractérisé en ce que ledit code d'accès est un code personnalisé attribué à l'abonné, le code d'intervention étant lui-même un code personnalisé attribué audit équipement, les deux codes étant transmis audit centre serveur par l'abonné afin d'engendrer, sur réponse positive à un critère de contrôle, auprès de l'abonné, une demande d'ordre de mise hors service de l'équipement.

3. Système selon l'une des revendications 1 ou 2, caractérisé en ce que le message (M) d'ordre de mise hors service comporte :
   – un drapeau d'identitification contenant ledit code personnalisé attribué audit équipement,
   – un message de commande de mise hors service contrôlée dudit équipement.

4. Système selon la revendication 3, caractérisé en ce que ledit réseau d'émission radioélectrique comprend au moins un point d'émission émetteur radioélectrique répartis sur un territoire de contrôle, chaque point d'émission comportant au moins :

   – un codeur (20) radiofréquence permettant d'assurer le codage d'au moins un paramètre radioélectrique d'une onde radiofréquence à partir dudit message d'ordre de mise hors service contrôlée de l'équipement,

   – un émetteur FM (21) permettant d'engendrer une onde radioélectrique modulée par ledit message (M) d'ordre de mise hors service de l'équipement sur une cellule territoriale dudit territoire de contrôle.

5.  Système selon l'une des revendications 3 ou 4, caractérisé en ce que ledit drapeau d'identification contenant ledit code personnalisé attribué audit équipement est codé sur neuf mots ou chiffres, ledit message de commande de mise hors service contrôlée de l'équipement étant codé sur sept mots ou chiffres.

6.  Système selon la revendication 5, caractérisé en ce que l'un et/ou l'autre drapeau d'identification respectivement message de commande comportent au plus trois chiffres réservés attribués à l'identification d'un type d'équipement relevant d'un même abonné.

7.  Système selon l'une des revendications précédentes, caractérisé en ce que lesdits moyens (4) récepteurs-décodeurs comportent une antenne radiofréquence (40) connectée à un élément actif de réception comprenant:

   – un récepteur MF (41), ladite antenne radiofréquence étant reliée audit récepteur MF,

   – un décodeur radiofréquence permettant de reconstituer le message d'ordre de mise hors service contrôlée de l'équipement, ce décodeur comportant un module (421) de traitement de radiomessagerie permettant, sur critère d'évaluation dudit message d'ordre de mise hors service contrôlée reconstitué, d'assurer la commande desdits moyens d'inhibition contrôlée.

8.  Système selon la revendication 7, caractérisé en ce que ladite antenne radiofréquence et ledit élément actif de réception sont mécaniquement solidaires dudit équipement et auto-protégés.

9.  Système selon l'une des revendications précédentes, caractérisé en ce que lesdits moyens d'inhibition contrôlée du fonctionnement dudit équipement comportent, connectés audit module de traitement de radiomessagerie,

   – un module logique (423, 424) de commande apte à établir un état de mise hors service, un état de mise à l'état de veille ou un état de remise en service dudit équipement,

   – une unité d'actionnement, connectée audit module logique et permettant d'effectuer la commande des organes essentiels dudit équipement.

10. Système selon l'une des revendications 7 à 9, caractérisé en ce que lesdits moyens récepteurs décodeurs comportent en outre, connectés à ladite antenne radiofréquence,

   – un récepteur (60) de radiobalise, sensible à une émission continue ou périodique d'un signal de radiobalise spécifique,

   – un émetteur conditionnel (61) de signal de radiobalise ledit émetteur conditionnel émettant, conditionnellement à la réception dudit message d'ordre de mise hors service contrôlée de l'équipement un message de signalisation et de localisation vers ladite radiobalise.

11. Système selon la revendication 10, caractérisé en ce que lesdites radiobalises (7.0 à 7.3) sont constituées par des transpondeurs à fréquence codée, lesdits transpondeurs étant disposés selon un réseau constituant un maillage sur ledit territoire de contrôle.

12. Système selon l'une des revendications 9 à 11, caractérisé en ce que l'équipement meuble ou mobile étant constitué par un véhicule automobile, lesdits moyens d'inhibition contrôlée comportent une unité d'actionnement directement reliée au circuit d'allumage électronique ou d'injection de carburant d'un véhicule.

13. Utilisation d'un système de mise hors service contrôlée d'un équipement meuble ou mobile selon l'une des revendications précédentes pour des véhicules automobiles, récepteurs de radiofréquences ou de télévision, appareils haute fidélité, radiotéléphones, micro-ordinateurs, calculateurs, caméras vidéo.

# FIG.1.

APPEL PAR TELEPHONE
DU MINITEL

CODE D'ACCES+ORDRE INTERVENTION

SERVEUR ⌐1

RESEAU

2

CODE D'ADRESSE+ORDRE

D M MC

20

CODEUR RDS

EMETTEUR

FM

21

3

4

5

# FIG.2.

ANTENNE FM

40

4

ACCORD → RECEPTEUR MF — 41

42

RECEPTEUR RDS

QRDS | RDS

420

CONTROLE QUALITE DE RECEPTION — 422

421

TRAITEMENT

RADIO MESSAGERIE

423 — | MISE HORS SERVICE | REMISE EN SERVICE

424

INTERFACE EQUIPEMENT — 5

FIG.3a.

GROUPE 7A I:

| PI ··· | 7A TP PTY ··· | Y1Y2Z1Z2 ··· | Z3Z4A1A2 ··· |

GROUPE 7A2:

| PI ··· | 7A TP PTY ··· | A3A4A5A6 ··· | A7A8A9A10 ··· |

GROUPE 7A3 (SEULEMENT AVEC UN MESSAGE A 18 CHIFFRES)

| PI ··· | 7APT PTY ··· | A11 A12 A13 A14 ··· | A15 A16 A17 A18 ··· |

FIG.3b.

# FIG.4.

APPEL PAR TELEPHONE
DU MINITEL

CODE D'ACCES+ORDRE INTERVENTION

SERVEUR 1

7.3 $f_2$

$f_2$

RESEAU

2

CODE
D'ADRESSE+
ORDRE

7.2 $f_2$

M

20

CODEUR RDS

EMETTEUR
FM

21

7.1

M'

$f_2$

$f_2$

7.0

3

4

$f_2$

$f_1$

M"

60

61

5

# FIG.5a.

ANTENNE FM

40

400

M'

4

II  I

ACCORD

RECEPTEUR MF — 41

42

RECEPTEUR RDS

QRDS          RDS

420

CONTROLE
QUALITE DE
RECEPTION    422

421

TRAITEMENT

RADIO MESSAGERIE

61  6  60

423 —  MISE
HORS SERVICE

REMISE
EN SERVICE

424

INTERFACE  EQUIPEMENT — 5

M'

| A1 | A2 | A3 | A4 | A5 | A6 | A7 | A8 | A9 |
|----|----|----|----|----|----|----|----|----|

Δr

| | | | | | A1 | A2 | A3 | A4 | A5 | A6 | A7 | A8 | A9 |
|--|--|--|--|--|----|----|----|----|----|----|----|----|----|

M"

# FIG.5b.

Office européen
des brevets

**RAPPORT DE RECHERCHE EUROPEENNE**

Numero de la demande

EP  92 40 0712

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y | FR-A-2 651 894 (TELECOM SYSTEMES MOBILES SA) <br> * page 2, ligne 34 - page 3, ligne 5 * <br> * page 5, ligne 1 - ligne 23 * <br> --- | 1,2,13 | G08G1/123 |
| Y | GB-A-2 051 442 (JOHN ARTHUR HOWARD) <br> * page 1, ligne 5 - ligne 50 * <br> --- | 1 | |
| Y | FR-A-2 625 009 (ROLLAND ET ESTARELLAS) <br> * le document en entier * <br> --- | 1,2,13 | |
| A | PATENT ABSTRACTS OF JAPAN <br> vol. 014, no. 152 (M-953)(4095) 8 Février 1989 ( IGARASHI KOKICHI ) 18 Janvier 1990 <br> & JP-A-2 014 948 <br> * abrégé * <br> --- | 1,2 | |
| A | GB-A-2 217 081 (AUTO TRACER LTD) <br> * revendications 1,7 * <br><br> ----- | 12 | |

|  | **DOMAINES TECHNIQUES RECHERCHES (Int. Cl.5 )** |
|---|---|
| | G08G <br> B60R <br> G08C <br> G08B |

Le présent rapport a été établi pour toutes les revendications

| Lieu de la recherche | Date d'achèvement de la recherche | Examinateur |
|---|---|---|
| LA HAYE | 08 JUILLET 1992 | REEKMANS M.V. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................
& : membre de la même famille, document correspondant

EPO FORM 1503 03.82 (P0402)